# EUROPEAN PATENT APPLICATION

(11) **EP 4 715 571 A1**
(43) Date of publication of application: **25.03.2026**
(21) Application number: 24201582.4
(22) Date of filing: 20.09.2024
(51) Int. Cl.: G06F 8/10, G06F 8/30, G06F 8/36, G06N 5/022

(54) **SYSTEM AND METHOD FOR GENERATING DOMAIN-SPECIFIC CODE SOLUTIONS**

(71) Applicant: Siemens Aktiengesellschaft, 80333 München (DE)
(72) Inventor: Saboo, Shantanu, 461331 Harda, M (IN); Banerjee, Amar, 412207 Pune, Maharastra (IN)
(74) Representative: Isarpatent

(57) **Abstract**

Disclosed is a method (100) for generating domain-specific code solutions. The method comprises receiving annotated source code comprising domain-specific annotations. The method further comprises processing the annotated source code using natural language processing to extract domain knowledge. The method further comprises generating a knowledge graph based on the extracted domain knowledge. The method further comprises receiving a problem statement for a domain-specific problem. The method further comprises traversing the knowledge graph to extract code snippets related to the problem statement. The method further comprises generating code for the domain-specific problem based on the extracted code snippets. The method further comprises outputting the generated code as a solution to the domain-specific problem.

## Description

The present invention relates to the field of computer science, specifically to the generation of domain-specific code solutions for machine learning (ML) and deep learning (DL) models for specific problem domains.

The current process of developing artificial intelligence (AI) model development code that is disconnected from a specific domain follows a general approach. This approach involves defining the problem, collecting and preparing data, selecting and training a model, evaluating its performance, and deploying it. However, without domain-specificness, there are several challenges in this process. One challenge is the limited understanding of domain context. Without domain-specific knowledge, the AI model may not fully grasp the nuances and intricacies of the specific field it is being applied to. This can lead to suboptimal performance and potentially inaccurate results. Another challenge is the difficulty in incorporating domain expertise. Domain experts possess valuable knowledge that could significantly enhance performance of the AI model. However, without a structured way to incorporate this expertise into the model development process, much of this knowledge remains unutilized. Yet another challenge is the lack of interpretability. AI models developed without domain-specific considerations often function as "black boxes," making it difficult to understand and explain their decision-making processes. This lack of interpretability can be problematic in domains where transparency and explainability are needed. Further, there is the challenge of complex integration with domain-specific systems. AI models developed in isolation from domain considerations may face difficulties when integrating with existing systems and workflows specific to that domain.

Domain-specificness is important for addressing these challenges and developing AI models that are tailored to the unique requirements of specific domains. The need for domain-specificness in AI model development arises from the recognition that different domains have unique characteristics, requirements, and challenges. Customizing AI models to specific domains offers improved performance and accuracy by incorporating domain expertise. It enables addressing domain-specific challenges, integrating with existing systems and workflows, and ensuring regulatory compliance. By tailoring the code to the domain, AI models can effectively navigate the complexities of each specific domain, resulting in more relevant and reliable predictions or decisions.

The technical problem of domain-specificness in AI model development code involves customizing and adapting the code and algorithms to address the unique requirements and challenges of specific domains. This problem includes several aspects. There is the need to overcome generalization limitations. AI models developed without domain-specific considerations may struggle to generalize well to the nuances of a specific domain. Also, handling domain-specific data representation and preprocessing is a challenge. Different domains may have unique data formats, structures, and preprocessing requirements that need to be addressed in the model development process. Further, incorporating domain expertise in feature engineering is important. Domain experts can provide invaluable insights into which features are most relevant and how they should be represented, but incorporating this knowledge into the model development process can be challenging. Furthermore, selecting and optimizing models for specific domains is a complex task. Different domains may require different types of models or model architectures to achieve optimal performance. Also, ensuring real-time processing and performance can be challenging, especially in domains with strict time constraints or large volumes of data. Lastly, facilitating integration and deployment of the AI models into existing domain-specific systems and workflows can be complex and time-consuming. By solving these problems, domain-specific AI model development code can enhance model performance, accuracy, interpretability, and usability. This enables the effective resolution of domain-specific problems and the generation of valuable insights and solutions.

The challenges of developing AI models without domain-specificness are currently handled through various approaches. These include involving domain experts in the development process, using transfer learning and pretrained models, applying domain-specific data augmentation and interpretability techniques, customizing evaluation metrics, and conducting domain-specific testing and validation. These strategies aim to ensure that models capture domain knowledge, adapt to specific requirements, provide interpretable solutions, and perform well within the target domain. However, these approaches have significant gaps that render them insufficient for fully addressing the challenges of domain-specific AI model development.

One significant gap is the limited availability of domain experts. Domain experts are often in high demand and may not have the time or resources to be deeply involved in the AI model development process. This can lead to incomplete or inconsistent incorporation of domain knowledge into the models. Another gap is the scarcity of domain-specific labelled data. Many domains lack large, well-labelled datasets that are required for training accurate AI models. This scarcity can limit the effectiveness of machine learning approaches in these domains. Yet another gap is the lack of domain-specific pretrained models. While pretrained models exist for many general tasks, there is often a lack of models pretrained on domain-specific data, which could serve as a starting point for more specialized tasks. Interpreting complex models in a domain-specific context is another challenge. While general interpretability techniques exist, they may not provide the level of domain-specific insight required in certain fields. Addressing issues of domain shift and generalization is also a significant challenge. Models trained on data from one domain may not generalize well to slightly different domains or to new scenarios within the same domain. The absence of standardized evaluation metrics for specific domains is another gap. Different domains may require different metrics to accurately assess model performance, but these metrics are often not well-defined or standardized. Limitations in resources and infrastructure also hinder the development of domain-specific models. Developing and training domain-specific models often requires significant computational resources and specialized infrastructure, which may not be available in all settings.

Closing these gaps necessitates advancements in several areas. These include improved methods for data collection in specific domains, more effective collaborations between AI developers and domain experts, development of domain-specific evaluation metrics, advancements in interpretability techniques that provide domain-relevant explanations, and increased availability of domain-specific computational resources and infrastructure. Additionally, addressing ethical and regulatory considerations within specific domains is important for responsible and robust domain-specific AI model development. Different domains may have unique ethical considerations or regulatory requirements that need to be carefully considered in the AI model development process.

In general, building ML and DL models is a complex process due to various factors. Data preprocessing is an important step, involving cleaning, transforming, and normalizing data for effective learning. This process can be particularly challenging when dealing with domain-specific data formats or structures. Selecting the right features and representations is another challenging aspect of model development. This requires a deep understanding of both the problem domain and the data, as well as knowledge of various feature selection and engineering techniques. Model selection is a key step that requires a deep understanding of the problem and data, along with knowledge of the strengths and weaknesses of different model architectures. Choosing the wrong model can lead to poor performance or inability to capture important patterns in the data. Hyperparameter tuning, such as adjusting learning rates and regularization parameters, can be time-consuming and complex, often demanding extensive experimentation. This process can be particularly challenging in domain-specific contexts where the impact of different hyperparameters may not be well understood. Balancing overfitting and underfitting is a persistent challenge in model development. Overfitting occurs when a model fits the training data too well but generalizes poorly to new data. Underfitting, on the other hand, occurs when the model fails to capture important patterns in the data. Striking the right balance is needed for developing models that perform well on both seen and unseen data. Adequate computational resources are needed for developing complex ML and DL models. This often includes powerful CPUs, GPUs, or TPUs, as well as extensive time and memory. The requirements can be particularly high for domain-specific tasks that involve large or complex datasets. For example, building an image recognition model for self-driving cars involves preprocessing large image datasets, selecting appropriate CNN architectures, tuning hyperparameters, and implementing strategies to prevent overfitting. This process may require the use of GPUs or TPUs and can involve extended training times.

Therefore, ML and DL model development is complex due to challenges in data preprocessing, model selection, hyperparameter tuning, balancing overfitting and underfitting, and meeting computational requirements. Deep knowledge, extensive experience, and rigorous experimentation are crucial for developing accurate and effective models. Although substantial knowledge and code exist for ML/DL solutions, code reuse across different problems is limited. This limitation often necessitates writing code from scratch when developing ML/DL models for new problems, even when these problems share similarities with previously solved tasks. This approach leads to inefficiencies in the development process and may result in inconsistent quality across different implementations.

Current approaches to address these challenges include AutoML (automated machine learning) and AutoDL (automated deep learning). These approaches aim to automate various stages of the machine learning pipeline, from data pre-processing to model selection, hyperparameter tuning, and model deployment. AutoML tools, such as Google AutoML, H2O.ai, and DataRobot, focus on automating the process of building and deploying ML models. These tools typically handle tasks such as data pre-processing, feature engineering, algorithm selection, hyperparameter tuning, and model deployment. AutoDL tools, like Auto-Keras and NASBench, concentrate on automating the process of building and deploying deep learning models. These tools often focus on automating tasks such as data pre-processing, network architecture search, hyperparameter tuning, and model deployment.

However, these existing approaches have limitations when it comes to domain-specific AI/ML problems. They are generally designed for general AI/ML problems and do not adequately address the unique requirements and nuances of specific domains. As a result, solutions generated by these approaches may lack the necessary domain specificity, potentially leading to suboptimal performance in domain-specific contexts. In contrast to these existing approaches, there is a need for a solution that can derive domain and ML knowledge from previously built AI/ML source code and use semantic reasoning and inferencing to derive a solution model for a given problem statement. Such an approach would allow for the creation of truly domain-specific AI solutions, capturing and utilizing the unique characteristics and requirements of each domain.

The present invention aims to addresses these needs by providing a method for generating domain-specific code solutions. The present invention leverages natural language processing techniques and knowledge graph representations to extract, store, and utilize domain knowledge from annotated source code. In particular, the present invention involves learning from existing annotated code, understanding the relationships between domain concepts, and applying this knowledge to generate optimized, domain-specific code solutions for new problems. More specifically, the present invention derives domain and ML knowledge from all previously built AI/ML source code and uses semantic reasoning and inferencing to derive a solution model for given problem statement. The solution model is represented as an ontology hence conforming to a neutral form. This derived model is then subjected to multiple validation checks and optimizations, and finally may be transformed into an executable source code following any programming language or a framework.

The object of the present invention is achieved by a method for generating domain-specific code solutions. The method employs a processing unit to execute a series of steps for such purpose. The method comprises receiving annotated source code comprising domain-specific annotations. The method further comprises processing the annotated source code using natural language processing to extract domain knowledge. The method further comprises generating a knowledge graph based on the extracted domain knowledge. The method further comprises receiving a problem statement for a domain-specific problem. The method further comprises traversing the knowledge graph to extract code snippets related to the problem statement. The method further comprises generating code for the domain-specific problem based on the extracted code snippets. The method further comprises outputting the generated code as a solution to the domain-specific problem. The present allows for automating the process of creating tailored code for specific domains, reducing manual effort and potential errors. By receiving annotated source code with domain-specific annotations, the method captures valuable domain knowledge that can be leveraged in code generation.

In one or more embodiments, processing the annotated source code using the using natural language processing comprises identifying elements including one or more of variables, functions, and dependencies within the annotated source code. This allows for efficient extraction of domain knowledge, enabling the method to understand and utilize complex domain-specific information.

In one or more embodiments, generating the knowledge graph comprises creating nodes to represent the variables and/or functions, from the identified elements. The method further comprises creating edges between the nodes to represent the dependencies, from the identified elements. The method further comprises storing the created nodes and edges in a graph database structure. Such process of creating nodes and edges in the knowledge graph to represent the elements such as variables, functions, and dependencies within the annotated source code, and their relationships enables a rich, interconnected representation of domain knowledge.

In one or more embodiments, traversing the knowledge graph comprises parsing the problem statement to identify key-terms and/or solution requirements. The method further comprises generating a query based on the identified key-terms and/or solution requirements. The method further comprises executing the query against the graph database structure to identify relevant nodes and edges therefrom. The method further comprises extracting the code snippets from the identified relevant nodes and edges. This allows for targeted and efficient code generation tailored to specific problem requirements.

In one or more embodiments, generating the code comprises integrating the extracted code snippets into a code structure. This provides a foundation for generating complete and coherent domain-specific solutions.

In one or more embodiments, generating the code further comprises one or more of applying optimizations on the code structure based on the domain knowledge; customizing the code structure according to requirements in the problem statement; and validating the code structure based on domain-specific rules represented in the knowledge graph. This enhances the quality and relevance of the generated code.

In one or more embodiments, the method further comprises receiving user feedback on the generated code. The method further comprises updating the knowledge graph based on the received user feedback by one or more of modifying the attributes of the nodes and the edges therein, and creating new nodes and new edges. The method further comprises storing the updated knowledge graph in the graph database structure. This allows for continuous improvement and refinement of the code generation process.

In one or more embodiments, the domain-specific annotations in the annotated source code comprise one or more of domain-specific concepts, domain-specific constrains, and domain-specific rules. This enables the method to capture and utilize a wide range of domain knowledge, leading to more comprehensive and accurate code solutions.

The object of the present invention is also achieved by a system comprising one or more processing units and a memory unit communicatively coupled to the one or more processing units. Herein, the memory unit comprises a code generation module stored in the form of machine-readable instructions executable by the one or more processing units, wherein the code generation module is configured to perform aforementioned method steps for generating domain-specific code solutions.

The object of the present invention is further achieved by a computer program product, having machine-readable instructions stored therein, that when executed by the one or more processing units, cause the one or more processing units to perform aforementioned method steps.

Still, other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
FIG 1 is a flowchart of a method for generating domain-specific code solutions, in accordance with one or more embodiments of the present invention;
FIG 2 is a block diagram representation of a system for generating domain-specific code solutions, in accordance with one or more embodiments of the present invention; and
FIG 3 is a flow diagram depicting a process using a knowledge graph for generating domain-specific code solutions, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for generating domain-specific code solutions are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

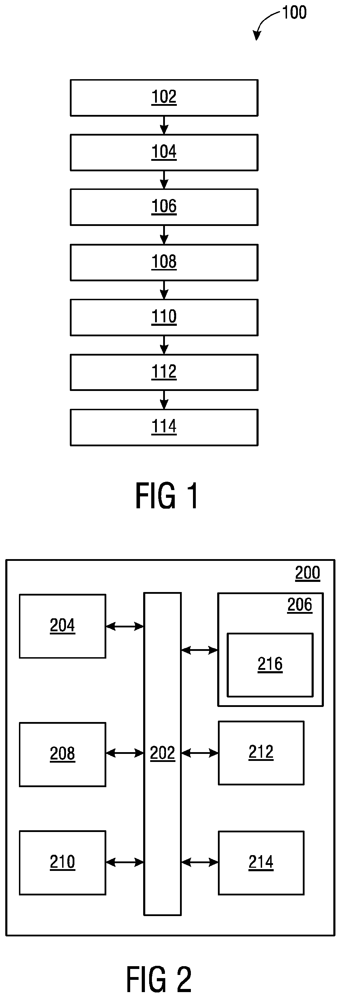

Referring to FIG 1, illustrated is a flowchart of a computer-implemented method (as represented by reference numeral 100) for generating domain-specific code solutions, in accordance with an embodiment of the present invention. The method 100 leverages annotated source code, natural language processing techniques, and knowledge graph representations to capture, store, and utilize domain knowledge in the code generation process. For purposes of the present invention, the term "domain-specific" refers to a particular field, industry, or area of application that has its own unique set of concepts, terminologies, rules, and best practices. Examples of domains could include finance, healthcare, manufacturing, or specific areas within computer science such as machine learning or database management.

Referring to FIG 2, illustrated is a block diagram of a system 200 for generating domain-specific code solutions, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for generating domain-specific code solutions. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or nonvolatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like, without any limitations.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for generating domain-specific code solutions. In particular, the memory unit 206 includes a code generation module 216 to perform steps for the said purpose.

Referring to FIGS 1-2 in combination, various steps of the method 100 (as described hereinafter), which may be executed in the system 200, or specifically in the processing unit 204 of the system 200, for generating domain-specific code solutions, are described. It may be appreciated that although the method 100 is illustrated and described as a sequence of steps, it may be contemplated that various embodiments of the method 100 may be performed in any order or different combinations, and need not include all of the illustrated steps.

At step 102, the method 100 includes receiving annotated source code comprising domain-specific annotations. The annotated source code can be written in any programming language, such as Python, Java, C++, or others. The annotations are additional pieces of information embedded within or associated with the annotated source code. These annotations provide context about the domain-specific aspects of the annotated source code, such as insights into the domain knowledge that may not be explicitly apparent from the annotated source code itself. The domain-specific annotations ("annotations") in the annotated source code may include various types of information. In present embodiments, the domain-specific annotations in the annotated source code include one or more of domain-specific concepts, domain-specific constrains, and domain-specific rules.

Herein, the domain-specific concepts refer to key ideas, entities, or phenomena that are fundamental to the particular field or industry. These concepts represent the core vocabulary and building blocks of knowledge within the domain. For example, in a financial domain, the domain-specific concepts may include "interest rate" or "cash flow". The annotations may also capture relationships between domain-specific concepts. These relationships describe how different concepts interact or influence each other within the domain. For instance, in the financial domain, a relationship might be "affects", as in "interest rate affects cash flow".

The domain-specific constraints are limitations or conditions that must be adhered to within the domain. These constraints often reflect physical, logical, or regulatory boundaries that may affect the behaviour or properties of domain entities. For example, in a banking domain, a constraint may be "withdrawal amount cannot exceed account balance." These constraints ensure that the generated code solutions operate within the acceptable parameters of the domain.

The domain-specific rules represent logical statements or procedural knowledge that guide decision-making or processes within the domain. These rules may include expert knowledge, best practices, or standard operating procedures. For example, in a business domain, a rule may be "apply a 10% discount if the total purchase exceeds $100." These rules capture the logic and decision-making processes that are unique to the domain.

In addition to above, the annotations may include metadata about AI algorithms, datasets, and features used in the annotated source code. This type of annotation is particularly relevant for machine learning or data science applications within specific domains. For instance, annotations may specify the type of algorithm used (e.g., "logistic regression", "neural network"), the nature of the dataset (e.g., "time series", "image classification"), or important features considered in the model. The annotations may also include performance metrics associated with elements of the annotated source code. These metrics may include factors such as execution time, memory usage, accuracy for machine learning models, or other relevant performance indicators specific to the domain and the particular code implementation.

An example annotated source code is provided below. In this example, the "predict_equipment_failure" method uses the Logistic Regression algorithm to predict the likelihood of equipment failure based on sensor data. The decorators provide annotations about the domain, objective, and AI-related details such as the algorithm used, the dataset, and the features and labels.

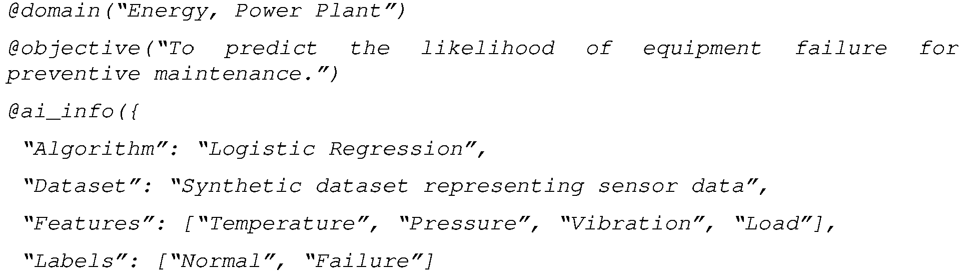

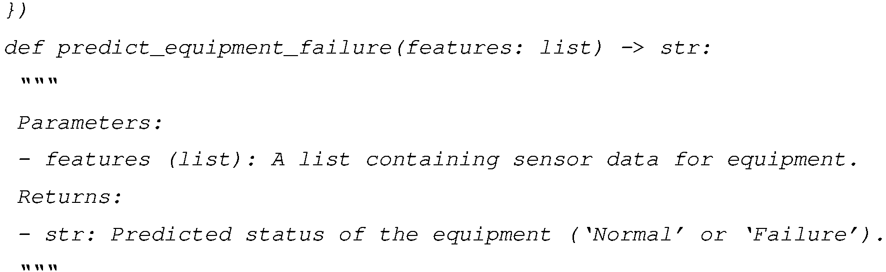

The process of receiving the annotated source code may involve various mechanisms, such as file uploads, database queries, or direct input from users. The specific format and structure of the annotations may vary depending on the programming language and the annotation conventions used within the particular domain or organization. However, regardless of the specific format, these annotations provide domain-specific information that enable the extraction and structuring of domain-specific knowledge that can be used to generate new, optimized code solutions for domain-specific problems (as discussed in proceeding paragraphs).

At step 104, the method 100 includes processing the annotated source code using natural language processing to extract domain knowledge. This step transforms the raw annotated code into structured, usable domain knowledge that can be represented in a graph form. Herein, the natural language processing (NLP) techniques are applied to analyse both the annotated source code itself and the associated annotations. The NLP techniques applied in this step allow for the interpretation of comments, annotations, and naming conventions within the annotated source code. This enables the extraction of domain knowledge that may not be explicitly represented in the code's syntax but is conveyed through natural language elements within the annotated source code. The outcome of this processing step is a structured representation of the code elements and their relationships, enriched with domain knowledge extracted from the annotations and natural language elements within the annotated source code.

In the present embodiments, processing the annotated source code using the using natural language processing comprises identifying elements including one or more of variables, functions, and dependencies within the annotated source code. This process allows for understanding the structure and components of the annotated source code, as well as the relationships between these components. Herein, the variables may represent domain-specific concepts or entities. For example, in a financial domain, variables may include "interest_rate", "principal_amount", or "loan_term". The identification of variables provides insight into the key data points and concepts used within the domain-specific code. The functions in the annotated source code often represent domain-specific operations or processes. For example, a function named "calculate_compound_interest" in a financial domain may be identified as a potentially important domain-specific operation. The identification of functions helps in understanding the actions that are significant within the domain. The dependencies may include relationships between variables and functions, such as which variables are used as inputs or outputs for specific functions. The dependencies may also include control flow dependencies, such as conditional statements or loops that determine how the code executes based on certain conditions.

Identifying these dependencies allows for understanding the logic and structure of the domain-specific code.

At step 106, the method 100 includes generating a knowledge graph based on the extracted domain knowledge. This step transforms the structured representation of domain knowledge obtained from processing the annotated source code into a graph-based format that can be efficiently queried. The knowledge graph serves as a comprehensive representation of the domain knowledge embedded in the original annotated source code. The knowledge graph captures the individual elements of the annotated source code, as well as the complex relationships and dependencies between these elements. The knowledge graph allows for querying and analysis, enabling to extract relevant code snippets and domain knowledge when generating new code solutions.

The process of generating the knowledge graph comprises specific steps. For this purpose, first, the method 100 involves creating nodes to represent the variables and/or functions, from the identified elements. Each variable identified in the annotated source code is represented as a node in the knowledge graph. These variables, as nodes, include the properties and attributes of the variables, such as their data type, scope, and any associated metadata. Similarly, the functions identified in the annotated source code are also represented as nodes. These functions, as nodes, include information about the function's name, parameters, return type, and any other relevant attributes extracted from the annotated source code and corresponding annotations. Next, the method 100 involves creating edges between the nodes to represent the dependencies, from the identified elements. These edges capture the relationships and interactions between the variables and functions in the annotated source code. For example, if a function uses a particular variable as an input, an edge is created between the function node and the variable node to represent this dependency. Similarly, if one function calls another function, an edge is created to represent this function call relationship. The edges can also represent other types of dependencies, such as inheritance relationships between classes, or data flow between different parts of the annotated source code. Further, the method 100 involves storing the created nodes and edges in a graph database structure. A graph database is specifically designed to store and query graph-structured data efficiently. The method 100 use of the graph database ensures that the knowledge graph can be quickly traversed and queried in subsequent steps of the code generation process.

Herein, the graph database structure allows for maintaining the complex relationships between different elements of the code, maintaining the context and interdependencies that are important for understanding the domain-specific aspects of the code. The graph database structure also facilitates efficient updating and modification of the knowledge graph as new information is added or existing information is refined. In the graph database, each node is typically stored with a unique identifier and its associated properties. These properties might include the name of the variable or function, its type, and any other relevant attributes extracted from the code. The edges are stored with information about the type of relationship they represent, as well as any attributes specific to that relationship.

At step 108, the method 100 includes receiving a problem statement for a domain-specific problem. The problem statement is typically a textual description that describes the specific task or issue that needs to be addressed within a particular domain. The problem statement may be received through various input mechanisms, such as a user interface (e.g., the interface 208), a file upload, or an API call. The format of the problem statement can vary, but it generally includes a description of the task to be performed, any constraints or requirements, and potentially some context about the domain in which the problem exists. The received problem statement is specific to a particular domain. This domain-specificity is important because it allows to leverage the domain knowledge captured in the knowledge graph to generate a tailored solution. In addition to describing the problem itself, the problem statement may also include specific requirements for the solution. These requirements could relate to performance constraints, input/output formats, or specific algorithms or approaches that should be used.

At step 110, the method 100 includes traversing the knowledge graph to extract code snippets related to the problem statement. This process may involve an intermediate step to convert the problem statement (which is in raw text format) into a technical query which can be used to query the knowledge graph. The traversal process leverages the structure and relationships encoded in the knowledge graph to efficiently locate and extract code snippets that are most pertinent to the problem at hand. By navigating through the knowledge graph, the method 100 can identify exact matches to the problem requirements as well as related or component functionalities that may be combined or adapted to address the specific problem. This traversal and extraction process results in a collection of code snippets that serve as the foundation for generating the final code solution, ensuring that the generated code is both relevant to the problem and based on the domain-specific knowledge captured in the knowledge graph.

In the present embodiments, the process of traversing the knowledge graph includes multiple steps. First, the method 100 involves parsing the problem statement to identify key-terms and/or solution requirements. This parsing process involves analysing the text of the problem statement using natural language processing techniques. The method 100 identifies important domain-specific terms, concepts, and any explicitly stated requirements for the solution. Next, the method 100 involves generating a query based on the identified key-terms and/or solution requirements. This query is formulated to search the knowledge graph for nodes and edges that are relevant to the problem statement. The query may use various graph querying techniques, such as pattern matching or semantic similarity measures, to find relevant elements in the knowledge graph. Further, the method 100 involves executing the query against the graph database structure to identify relevant nodes and edges therefrom. This execution process involves traversing the graph structure, following edges between nodes, and evaluating nodes and edges against the criteria specified in the query. Subsequently, the method 100 involves extracting the code snippets from the identified relevant nodes and edges. For this purpose, the nodes in the knowledge graph that represent functions or code blocks and have been identified as relevant are accessed, and the code snippets associated with these nodes are retrieved. These code snippets may be entire functions, parts of functions, or other code segments that have been determined to be relevant to the problem statement.

At step 112, the method 100 includes generating code for the domain-specific problem based on the extracted code snippets. This step involves transforming the collection of relevant code snippets retrieved from the knowledge graph into a functional code solution that addresses the specific problem statement. The code generation process takes into account the relationships and context of the extracted code snippets, as well as the requirements specified in the problem statement. This process combines and potentially extends the extracted code snippets to create a solution that leverages the domain-specific knowledge embedded in the original annotated source code.

In particular, herein, generating the code includes integrating the extracted code snippets into a code structure. This integration process involves assembling the various code snippets into a coherent and logically structured program or function. This integration process includes analysing the extracted snippets and determining how they should be combined, potentially filling in gaps with additional code where necessary. This may involve ordering the code snippets in a logical sequence, resolving any conflicts or inconsistencies between the code snippets, and ensuring that the integrated code adheres to the syntax and conventions of the target programming language. The resulting code structure forms a complete and executable solution that directly addresses the requirements of the domain-specific problem statement.

In some embodiments, the method 100 for generating domain-specific code solutions includes additional steps in the code generation process. These steps are aimed at refining and improving the initial code structure to ensure it meets the specific requirements of the problem and adheres to domain-specific best practices.

Herein, the method 100 may include applying optimizations on the code structure based on the domain knowledge. This optimization process leverages the domain-specific information captured in the knowledge graph to enhance the efficiency, performance, or readability of the generated code. Optimizations may include algorithmic improvements, data structure selections, code reorganizations, among others that are particularly effective or important within the specific domain.

The method 100 may also include customizing the code structure according to requirements in the problem statement. This customization process ensures that the generated code solves the general problem as well as addresses any specific constraints, preferences, or additional functionalities defined in the problem statement. The method 100 may modify variable names, adjust function parameters, or incorporate specific logic to align the generated code more closely with the stated requirements in the problem statement.

The method 100 may further include validating the code structure based on domain-specific rules represented in the knowledge graph. This validation process checks the generated code against known rules, best practices, or constraints that are specific to the domain. These rules may include coding standards, regulatory requirements, or performance benchmarks that are captured in the knowledge graph. The validation process helps ensure that the generated code functions correctly and complies with domain-specific norms and regulations.

At step 114, the method 100 includes outputting the generated code as a solution to the domain-specific problem. This involves presenting the final, refined code to the user or system that initially provided the problem statement. The output may be in the form of a complete, executable program file, or it may be presented as a code snippet or function, depending on the nature of the problem and the requirements specified. In some implementations, the output may include multiple code variants or solutions, each addressing the problem in a slightly different way or optimized for different priorities (e.g., speed vs. memory efficiency). This allows the user to select the most appropriate solution for their specific context. The output process ensures that the generated code is delivered in a format that is readily usable within the context of the specific domain and problem requirements.

In some embodiments, the method 100 for generating domain-specific code solutions includes additional steps that allow for continuous improvement and refinement of the knowledge graph based on user feedback. For this purpose, the method 100 includes receiving user feedback on the generated code. This feedback may come from users who have reviewed, tested, or implemented the generated code solution. The feedback mechanism is designed to capture specific details about effectiveness and accuracy of the generated code within the context of the domain-specific problem. The method 100, then, includes updating the knowledge graph based on the received user feedback by one or more of modifying the attributes of the nodes and the edges therein, and creating new nodes and new edges. For example, if user feedback indicates that a particular code snippet was especially effective, the weight of the corresponding node in the knowledge graph may be increased. If user feedback introduces entirely new concepts or code patterns, new nodes may be added to knowledge the graph to represent this additional knowledge. If user feedback suggests that certain code components are often used together, new edges may be created to represent this relationship. The method 100 further includes storing the updated knowledge graph in the graph database structure. It may be understood that the same knowledge graph, as created initially, is updated herein, which may then have updated information for any subsequent user queries. This ensures that the new knowledge is made available for future code generation tasks. The storage process may involve updating existing database entries, adding new entries, or reorganizing the graph structure to accommodate the new knowledge.

In present implementations, machine learning techniques can be employed to train models that learn from the knowledge graph and generate code based on specific problem requirements. By analysing patterns and relationships within the knowledge graph, these models can produce code that is optimized for a given problem domain, improving efficiency and accuracy. For instance, the solution can be optimized by looking at domain level information in the knowledge graph. Based on the historic information in the knowledge graph for the given domain, various domain related code can be identified and directly used during the code generation. For example, Power Plant domain frequently uses a 'clean_data_script'. This script can be used in the new solution. In another instance, based on the type of AI algorithms used in the knowledge graph, suitable algorithms can be picked for a given problem and domain. For example, the problem of predictive maintenance in a power plant uses linear regression. This information from the knowledge graph can be used to choose a suitable algorithm. Similar to the algorithms, AI architecture (2DCNN, 3DCNN, GAN, ANN, etc.) can be used during the code generation, based on the relations between the architectures, algorithms, functions and the domain. In yet another instance, based on the domain, and other meta-data, code/function can be reused in new problems during code generation, allowing reusability of code.

Algorithm for the above optimizations for code generation is given below

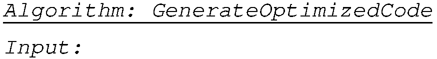

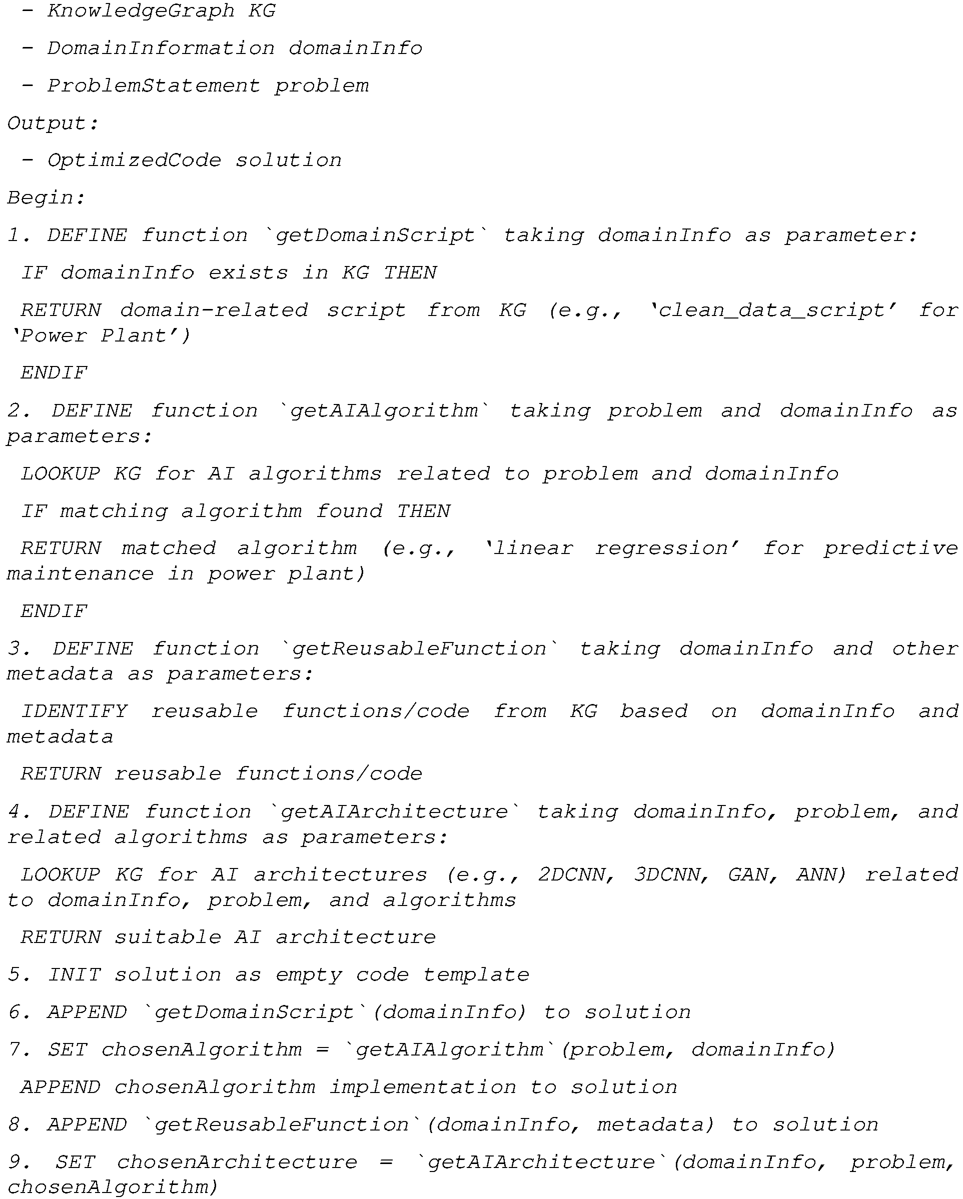

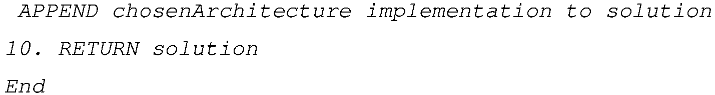

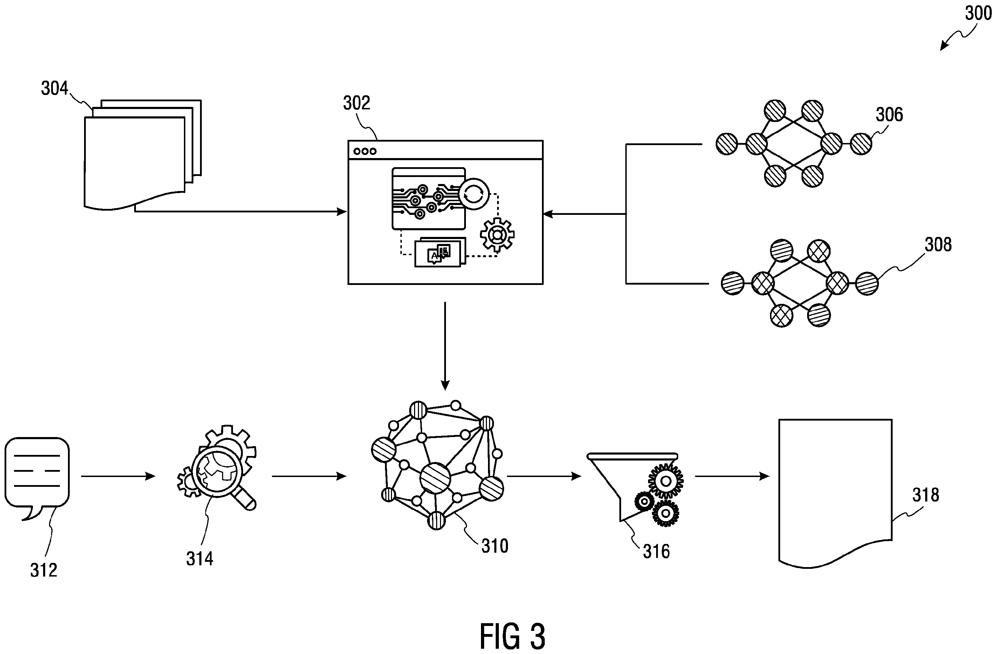

Referring to FIG 3, illustrated is a flow diagram depicting a process 300 for generating domain-specific code solutions using a knowledge graph, in accordance with one or more embodiments of the present invention. The process 300 implements a processing unit 302 (such as, the processing unit 204). The process 300 begins with a repository of annotated source code 304, which comprises multiple AI model development code files annotated with domain/AI-ML ontology concepts. These annotations highlight domain-specific concepts, entities, relationships, and constraints within the code. The annotations may be created manually by domain experts or automatically using large language models. The annotated source code 304 is input into the processing unit 302, which is represented as a graphical user interface. The processing unit 302 contains components for processing the annotated code using natural language processing (NLP) and semantic analysis techniques to extract domain knowledge. This extraction process involves identifying key elements such as variables, functions, and dependencies within the annotated source code. The processing unit 302 also interfaces with two ontology structures: a problem domain ontology 306 and an AI/ML domain ontology 308. These ontologies provide additional context and structure for interpreting the extracted domain knowledge.

Based on the extracted domain knowledge and guided by the ontology structures, the processing unit 302 generates a knowledge graph 310. This knowledge graph 310 represents the domain knowledge in a structured format, with nodes representing entities and edges representing relationships between entities. The knowledge graph 310 is enriched with metadata such as data types and constraints, which enhances its comprehension and usability.

The process 300 then receives a problem statement 312 for a domain-specific problem. This problem statement 312 is typically expressed in natural language. The problem statement 312 is input into a query generator 314, which converts the problem statement into a technical query suitable for querying the knowledge graph 310. The generated query is then executed against the knowledge graph 310 to extract relevant code snippets and domain knowledge related to the problem statement. This querying process leverages the structure of the knowledge graph 310 for problem understanding.

The results of the query are then processed by a reasoning-based results assembler 316. This component analyses the extracted information and assembles it into a coherent solution structure. Finally, the assembled results are used to generate problem-specific code (as represented by reference numeral 318). This generated code 318 represents the solution to the domain-specific problem, incorporating the relevant domain knowledge and code snippets extracted from the knowledge graph 310.

The process 300 provides several advantages, including holistic problem solving, accurate code derivation, efficient knowledge extraction, and improved collaboration. By leveraging the knowledge graph 310, the process 300 is able to generate context-aware and high-quality code solutions for domain-specific problems.

The present invention the method 100 for generating domain-specific code solutions by integrating a knowledge graph that represents domain knowledge derived from annotated source code. This approach enables a holistic understanding of the problem domain and facilitates advanced querying and inference, leading to more accurate and context-aware code solutions. The method 100 automates the extraction of domain knowledge from annotated source code using natural language processing and semantic analysis techniques, transforming relevant concepts, entities, relationships, and constraints into a structured knowledge graph. This knowledge graph integration enhances problem-solving capabilities, enables intelligent problem discovery, and improves the accuracy and relevance of code solutions compared to traditional approaches.

The method 100 of the present invention provides an approach to generating domain-specific code solutions by leveraging a knowledge graph constructed from annotated source code. The method 100 enhances the process of developing AI and machine learning models by capturing and utilizing domain-specific knowledge in a structured format. The knowledge graph-based approach enables efficient extraction and application of domain expertise, leading to more accurate and context-aware code generation. The ability of the method 100 to process annotated source code, extract domain knowledge, and generate code solutions represents a significant advancement in the field of automated code generation for domain-specific problems.

The method 100 offers several advantages over existing solutions. Firstly, the domain-specific code derivation process ensures that the generated code is specifically tailored to the problem domain by leveraging the encoded domain knowledge in the knowledge graph. This results in more effective and efficient solutions, enhancing the accuracy and performance of the generated code. Secondly, the automation of knowledge extraction significantly reduces manual effort and minimizes the risk of human error, leading to increased efficiency and productivity for developers and domain experts. Additionally, the method 100 supports iterative refinement of the knowledge graph, allowing for continuous improvements in code derivation and long-term scalability. The knowledge graph acts as a centralized repository of domain knowledge, enabling developers to approach problem-solving comprehensively by exploring connections and patterns within the knowledge graph. This facilitates improved collaboration between domain experts and developers, as the knowledge graph serves as a common language for communication.

The method 100 benefits multiple stakeholders in the AI model development process. Developers can leverage the automated extraction of domain knowledge and the knowledge graph representation to derive accurate, context-aware code solutions tailored to specific problem domains. Domain experts can contribute their insights and annotations to enhance the knowledge graph and validate the derived code solutions. AI model stakeholders can rely on the generated code solutions to make informed decisions, assess project feasibility, and evaluate alignment with business requirements. The integration of domain knowledge into code solutions through the knowledge graph significantly enhances efficiency, accuracy, and relevance in AI model development for domain-specific problems, leading to more robust and context-aware AI models.

The method 100 empowers users, including those from non-technical backgrounds, to train and test machine learning models for various use-cases by simply populating the knowledge graph. This democratizes the model development process, making it accessible to a wider range of users. The method 100 allows for integration with neural architecture search (NAS) based architectures, enabling users to select optimal model architectures and seamlessly convert them into executable code. The method 100 can provide users with multiple top-ranked architectures and facilitate the visualization of model training metrics, enhancing the model selection and evaluation process. Furthermore, the flexibility of the method 100 allows it to work with various machine learning and deep learning frameworks, such as TensorFlow and PyTorch, making it valuable for users with different framework preferences. Further, the comprehensive nature of the knowledge graph, which includes both problem and solution domain information, enables the method 100 to validate various model structures in accordance with the specific domain requirements, ensuring the generated code is not only functional but also domain-appropriate. The present invention, thereby, contribute to a more efficient, accessible, and domain-aware approach to generating code solutions for AI and machine learning problems.

It may be appreciated by those skilled in the art that the present invention, as described herein, may be practiced in parts or in its entirety, and the scope of the invention should not be limited to any particular combination of features or steps described herein. In particular, the knowledge graph generation aspect of the invention may be implemented as a standalone process or system, independent of the code generation steps. Conversely, the code generation aspect of the invention, which utilizes the knowledge graph, may be implemented using a pre-existing knowledge graph generated through the methodology described above or through alternative means. These two aspects of the invention, i.e., knowledge graph generation and code generation using the knowledge graph, while complementary, are not mutually dependent or limiting. The invention may be practiced by implementing either aspect individually or in combination, and such implementations fall within the scope of the present invention.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A computer-implemented method (100) for generating domain-specific code solutions, the method (100) comprising implementing a processing unit for:
receiving annotated source code comprising domain-specific annotations;
processing the annotated source code using natural language processing to extract domain knowledge;
generating a knowledge graph based on the extracted domain knowledge;
receiving a problem statement for a domain-specific problem;
traversing the knowledge graph to extract code snippets related to the problem statement;
generating code for the domain-specific problem based on the extracted code snippets; and
outputting the generated code as a solution to the domain-specific problem.

2. The method (100) of claim 1, wherein processing the annotated source code using the using natural language processing comprises identifying elements including one or more of variables, functions, and dependencies within the annotated source code.

3. The method (100) of claim 2, wherein generating the knowledge graph comprises:
creating nodes to represent the variables and/or functions, from the identified elements;
creating edges between the nodes to represent the dependencies, from the identified elements; and
storing the created nodes and edges in a graph database structure.

4. The method (100) of claim 3, wherein traversing the knowledge graph comprises:
parsing the problem statement to identify key-terms and/or solution requirements;
generating a query based on the identified key-terms and/or solution requirements;
executing the query against the graph database structure to identify relevant nodes and edges therefrom; and
extracting the code snippets from the identified relevant nodes and edges.

5. The method (100) of claim 4, wherein generating the code comprises integrating the extracted code snippets into a code structure.

6. The method (100) of claim 5, wherein generating the code further comprises one or more of:
applying optimizations on the code structure based on the domain knowledge;
customizing the code structure according to requirements in the problem statement; and
validating the code structure based on domain-specific rules represented in the knowledge graph.

7. The method (100) of claim 3, further comprising:
receiving user feedback on the generated code;
updating the knowledge graph based on the received user feedback by one or more of modifying the attributes of the nodes and the edges therein, and creating new nodes and new edges; and
storing the updated knowledge graph in the graph database structure.

8. The method (100) of claim 1, wherein the domain-specific annotations in the annotated source code comprise one or more of domain-specific concepts, domain-specific constrains, and domain-specific rules.

9. A system (200) comprising:
one or more processing units (204); and
a memory unit (206) communicatively coupled to the one or more processing units (204), wherein the memory unit (206) comprises a code generation module (216) stored in the form of machine-readable instructions executable by the one or more processing units (204), wherein the code generation module (216) is configured to perform method (100) steps for generating domain-specific code solutions, according to any of the claims 1 to 8.

10. A computer-program product having machine-readable instructions stored therein, which when executed by one or more processing units (204), cause the one or more processing units (204) to perform a method (100) according to any of the claims 1 to 8.
